# EUROPÄISCHE PATENTANMELDUNG

(11) **EP 4 681 849 A1**
(43) Veröffentlichungstag der Anmeldung: **21.01.2026**
(21) Anmeldenummer: 25184753.9
(22) Anmeldetag: 24.06.2025
(51) Int. Cl.: B23B 49/00

(54) **VORRICHTUNG ZUR BEGRENZUNG EINER BOHRTIEFE FÜR EINE BOHRMASCHINE**

(30) Priorität: 17.07.2024 DE 102024120220
(71) Anmelder: ATTOS GmbH, 90431 Nürnberg (DE)
(72) Erfinder: Krilhof, Wilhelm, 90431 Nürnberg (DE)
(74) Vertreter: Hafner & Kohl PartmbB

(57) **Zusammenfassung**

Vorrichtung (1) zur Begrenzung einer Bohrtiefe (BT) für eine Bohrmaschine (BM), mit
- einer in einer festen Relativposition (R) zu einer Bohrmaschine (BM) platzierbare, eine Längsachse (3) definierende Trageinrichtung (2),
- einem an der Trageinrichtung (2) relativ zu dieser entlang der Längsachse (3) verschiebbar geführten Begrenzungskörper (4),
- einem am Begrenzungskörper (4) entlang der Längsachse (3) verschiebbar und arretierbar gehaltenen Distanzelement (5),
- einem an der Trageinrichtung (2) in wenigstens einer Position entlang der Längsachse (3) arretierbar gehaltenen Anschlagkörper (7), wobei die Vorrichtung (1) eingerichtet ist, durch Kontakt des Begrenzungskörpers (4) mit dem Anschlagkörper (7) eine vordefinierte Bohrtiefe (BT) zu begrenzen.

## Beschreibung

Die Erfindung betrifft eine Vorrichtung zur Begrenzung einer Bohrtiefe für eine Bohrmaschine.

Entsprechende Vorrichtungen zur Begrenzung einer Bohrtiefe für eine Bohrmaschine sind aus dem Stand der Technik dem Grunde nach bekannt. So ist es beispielsweise bekannt einen stabförmigen Tiefenbegrenzer an einem als separates Bauteil an eine Bohrmaschine befestigbaren Handgriff vorzusehen. Dieser stabförmige Tiefenbegrenzer wird vor einem Ausführen eines Bohrprozesses mit der Bohrmaschine auf einen definierten Abstand zu einer Spitze eines in die Bohrmaschine eingesetzten Bohrers eingestellt und dient als Anschlag während dem Ausführen des Bohrens.

Im Stand der Technik gibt es eine Vielzahl weiterer, an eine Bohrmaschine anbaubarer Vorrichtungen, welche eine Begrenzung der Bohrtiefe eines Bohrlochs, das vermittels der mit der Vorrichtung bestückten Bohrmaschine geschaffen werden soll, ermöglichen. So ist beispielsweise aus DE 10 2012 106 909 A1 eine Vorrichtung bekannt, die zur Anzeige einer Bohrtiefe für eine Bohrmaschine eingerichtet ist, wobei die Vorrichtung einen in einer festen Relativposition zur Bohrmaschine platzierbaren Halter umfasst und ein am Halter relativ zu diesem entlang einer Axialrichtung verschiebbar geführter Messkörper vorgesehen ist und ein am Messkörper in Axialrichtung verschiebbar und arretierbar gehaltenes Distanzelement eingesetzt wird. Nachteilig ist es hierbei, dass die Vorrichtung keinen kompakten Aufbau aufweist und insbesondere, dass die Vorrichtung in der Endmontagestellung an der Bohrmaschine seitlich zu dieser auf Höhe des Bohrfutters angeordnet ist, sodass eine Nutzung kurzer Bohrer nicht ermöglicht wird.

JP S59 - 227 306 A beschreibt eine Bohrhilfe, die es erlaubt, eine zu bohrende Bohrtiefe einzustellen bzw. zu begrenzen.

Der Erfindung liegt die Aufgabe zugrunde, eine Vorrichtung zur Begrenzung der Bohrtiefe für eine Bohrmaschine anzugeben, welche einen kompakten Aufbau aufweist und den Einsatz von kurzen bzw. kleinen Bohrern in der Bohrmaschine ermöglicht. Ferner soll die Vorrichtung einen störungsunanfälligen Aufbau aufweisen sowie kostengünstig herstellbar sein.

Die Aufgabe wird durch eine Vorrichtung zur Begrenzung einer Bohrtiefe für eine Bohrmaschine gemäß Anspruch 1 gelöst. Die hierzu abhängigen Ansprüche betreffen mögliche Ausführungsformen der Vorrichtung. Ferner wird die Aufgabe durch ein Verfahren gemäß Anspruch 15 gelöst.

Die Erfindung betrifft eine Vorrichtung zur Begrenzung einer Bohrtiefe (BT) für eine Bohrmaschine, insbesondere für eine Handbohrmaschine, mit einer in einer festen Relativposition (R) zu einer Bohrmaschine platzierbaren, eine Längsachse definierenden Trageinrichtung. Die Trageinrichtung ist dabei mittelbar oder unmittelbar an der Bohrmaschine befestigt oder befestigbar und trägt weitere Elemente der Vorrichtung. An der Trageinrichtung ist ein relativ zu der Trageinrichtung entlang der Längsachse der Trageinrichtung verschiebbar geführter Begrenzungskörper angeordnet bzw. gelagert. Der Begrenzungskörper kann, insbesondere in vorgegebenen Grenzen, bewegbar an der Trageinrichtung angeordnet sein. Ferner umfasst die Vorrichtung ein zumindest, bevorzugt ausschließlich, am Begrenzungskörper gehaltenes und entlang der Längsachse verschiebbar und arretierbar gehaltenes Distanzelement auf. Die Lagerung des Distanzelements kann über eine, insbesondere unmittelbare, Lagerung des Distanzelements an dem Begrenzungskörper und/oder über eine, insbesondere unmittelbare, Lagerung, des Begrenzungskörpers an der Trageinrichtung erfolgen. Beispielsweise steht der Distanzelement in einem direkten Kontakt mit dem Begrenzungskörper und der Begrenzungskörper in einem direkten Kontakt mit der Trageinrichtung.

Ein Anschlagkörper der Vorrichtung ist an der Trageinrichtung, insbesondere wechselweise, in wenigstens einer ersten und zumindest einer zweiten Position entlang der Längsachse arretierbar gehalten bzw. haltbar. D. h. z. B., dass der Anschlagkörper in der ersten und der wenigstens einen zweiten Position an der Trageinrichtung befestigbar ist und die beiden Positionen in Längsrichtung voneinander beabstandet sind. Durch Kontakt des Begrenzungskörpers mit dem Anschlagkörper kann eine vordefinierte Bohrtiefe begrenzt werden. D. h., dass eine Eindringtiefe eines Bohrers einer mit der Vorrichtung ausgestatteten Bohrmaschine während bzw. bei einem, insbesondere unmittelbaren, Kontakt von Begrenzungskörper und Anschlagkörper begrenzt wird, da das dem Bohrloch zugewandte Ende des Distanzelements in Kontakt mit dem mit dem Bohrloch zu versehenden Körper gebracht wird und ein weiterführendes Zuführen bzw. eine weitergehende Vorschubbewegung der Bohrmaschine in Richtung des mit dem Bohrloch zu versehenden Körper verhindert wird. Es ist möglich, dass der Begrenzungskörper eine Arretiereinrichtung 19 aufweist, z. B. ein Schraubelement (z. B. eine Schraube), das in einer begrenzungsgrundkörperseitigen Schraubelementaufnahme (z. B. ein Gewindeloch) aufgenommen ist, wobei der gegenseitige Kontakt zur Bohrtiefenbegrenzung durch einen Kontakt der Arretiereinrichtung, insbesondere des Schraubelements, und dem Anschlagkörper erfolgt. Damit kann das Schraubelement eine Doppelfunktion ausführen, da es zum Fixieren des Distanzelements an dem Begrenzungskörper und als Kontaktbereich bzw. Begrenzungsbereich für den Kontakt mit dem Anschlagkörper dient.

Der Anschlagkörper kann beispielsweise unverlierbar oder lösbar an der Trageinrichtung beweglich und arretierbar befestigt sein. Beispielsweise ist der Anschlagkörper über eine zumindest einen Rotationsanteil aufweisende Arretierbewegung an der Trageinrichtung, insbesondere an einem als Hülsenkörper ausgebildeten Bestandteil der Trageinrichtung, arretierbar. Bevorzugt ist der Anschlagkörper über eine ausschließlich eine drehende Arretierbewegung relativ zu der Trageinrichtung ausführende Bewegung an der Trageinrichtung arretierbar. Alternativ oder zusätzlich kann der Anschlagkörper über eine rastende Verbindung an der Trageinrichtung arretiert werden.

In einer bevorzugten Ausführungsform kann die Trageinrichtung einen, einen Aufnahmeraum aufweisenden Hülsenkörper umfassen, wobei in dem Aufnahmeraum des Hülsenkörpers der Begrenzungskörper und/oder das Distanzelement zumindest abschnittsweise angeordnet ist bzw. sind. Der Hülsenkörper kann durch dessen Umfangsfläche den Aufnahmeraum zumindest abschnittsweise, bevorzugt überwiegend, umschließen. Damit kann ein Eindringen von Schmutz oder Staub in den Aufnahmeraum verhindert werden, sodass etwaige, im Inneren des Aufnahmeraums befindliche, insbesondere bewegliche, Teile der Vorrichtung einen gesteigerten Schutz vor mechanischen Umwelteinwirkungen aufweisen. Der Hülsenkörper kann beispielsweise die Grundform eines Zylinders, insbesondere eines Kreiszylinders, aufweisen. Es ist möglich, dass ein Grundkörper des Begrenzungskörpers - Begrenzungsgrundkörper - vollständig innerhalb des Aufnahmeraums des Hülsenkörpers angeordnet ist, wobei ein Arretierelement (z. B. Schraubelement) der Arretiereinrichtung des Begrenzungskörpers mit dem Begrenzungsgrundkörper verbunden oder verbindbar ist und dieses Arretierelement die Lochstruktur durchgreift bzw. sich zumindest abschnittsweise in einen Bereich außerhalb des Aufnahmeraums erstreckt.

Das Distanzelement kann beispielsweise über den Begrenzungskörper und über ein (erstes und/oder weiteres) Abstützmittel, welches an einem Halter und/oder an einem Adapterkörper angeordnet oder ausgebildet ist, abgestützt sein. Mit anderen Worten kann das Distanzelement mittelbar über den Begrenzungskörper und dessen bewegbaren Lagerung an dem Hülsenkörper und über eine Lagerstruktur, z. B. über einen Gleitlagerkontakt mit einer Kontaktfläche des Halters und/oder des Adapterkörpers, abgestützt bzw. bewegbar an den weiteren Bauteilen der Vorrichtung gelagert sein. Beispielsweise ist die Abstützung des Distanzelements an dem Halter und/oder an dem Adapterkörper als, insbesondere geradliniger, Kanal bzw. Durchbruch ausgebildet. Insbesondere dann, wenn in der Ausgangsstellung bzw. Nullpunktlage des Begrenzungskörpers ein Abstand zwischen dem Begrenzungskörper und dem Halter bzw. dem Adapterkörper vorliegt, kann eine hinreichende Lagerung des Distanzelements durch den Begrenzungskörper und den Halter bzw. den Adapterkörper realisiert werden. Der Halter kann zumindest abschnittsweise, insbesondere vollständig, einen integralen, d. h. einstückigen, Bestandteil der Bohrmaschine bilden oder zumindest abschnittsweise, bevorzugt vollständig, lösbar an die Bohrmaschine befestigbar sein. Beispielsweise ist vermittels des Halters ein Griffelement an der Bohrmaschine befestigt. Bevorzugt ist der Halter oder ein über diesen an der Bohrmaschine befestigtes Griffelement zwischen einem Bohrfutter und einem Auslösetaster zum Aktivieren der Bohrmaschine angeordnet.

Der Hülsenkörper kann beispielsweise eine Lochstruktur aufweisen, wobei der Begrenzungskörper die Lochstruktur zumindest abschnittsweise durchgreift. Mit anderen Worten erstreckt sich ein erster Abschnitt des Begrenzungskörpers in den Aufnahmeraum und ein weiterer Abschnitt desselben Begrenzungskörpers in einen außerhalb des Hülsenkörpers liegenden Abschnitt, wobei hierzu der Begrenzungskörper die Lochstruktur durchgreift. Mit anderen Worten verbindet die Lochstruktur den Aufnahmeraum des Hülsenkörpers mit einem äußeren Bereich des Hülsenkörpers.

Optional kann die Lochstruktur als Langloch ausgebildet sein und eine Längsachse aufweisen, die parallel zu der Längsachse der Trageinrichtung bzw. zur Längsachse des Hülsenkörpers verläuft. Die Lochstruktur kann auch eine gebogene Erstreckungsform aufweisen, z. B. spiralartig bzw. schraubenartig an der Trageinrichtung ausgebildet sein.

Im Aufnahmeraum des Hülsenkörpers kann beispielsweise ein Abstützkörper angeordnet oder ausgebildet sein, der eingerichtet ist, das Distanzelement zu dem Hülsenkörper zumindest abschnittsweise abzustützen. Dadurch, dass zumindest teilweise, bevorzugt überwiegend, besonders bevorzugt ausschließlich, die Abstützung des Distanzelements durch den im Aufnahmeraum angeordneten Abstützkörper erfolgt, kann die Lagerstelle vor äußeren Einflüssen (z. B. Verschmutzung) geschützt werden.

In einer weiteren beispielhaften Ausführungsform kann wenigstens an einem Endbereich des Hülsenkörpers, bevorzugt an einem dem zu bohrenden Bohrloch abgewandten Endbereich des Hülsenkörpers, ein weiteres Abstützmittel angeordnet oder ausgebildet sein, das eingerichtet ist, das Distanzelement zu dem Hülsenkörper zumindest abschnittsweise abzustützen. Dadurch, dass das weitere Abstützmittel an wenigstens einem Endbereich des Hülsenkörpers angeordnet ist, kann der Grad eines mechanischen Spiels geringgehalten werden. Das weitere Abstützmittel kann beispielsweise als separates Bauteil, insbesondere unmittelbar, an dem Hülsenkörper, angeordnet sein. Beispielsweise ist das weitere Abstützmittel vermittels einer kraft- und/oder form- und/oder stoffschlüssigen Verbindung an dem Hülsenkörper befestigt. In einer bevorzugten Ausführungsform ist das weitere Abstützmittel über eine ein Schraubgewinde umfassende Verschraubung an dem Hülsenkörper anschraubbar. Hierzu kann z. B. der Hülsenkörper ein Außengewinde und das weitere Abstützmittel ein mit dem Außengewinde korrespondierendes Innengewinde aufweisen. Selbstverständlich kann alternativ der Hülsenkörper ein Innengewinde und das weitere Abstützmittel ein mit dem Innengewinde korrespondierendes Außengewinde aufweisen. Optional ist es möglich, dass das weitere Abstützmittel als einstückiger Bestandteil des Hülsenkörpers ausgebildet ist. Beispielsweise ist der Hülsenkörper aus Kunststoff und/oder aus Metall, z. B. aus einem Blechkörper, ausgebildet, wobei das weitere Abstützmittel als materialeinheitlicher bzw. einstückiger Bestandteil des den Hülsenkörper bildenden Kunststoffs und/oder Metalls ausgebildet ist. Beispielsweise weist der Hülsenkörper an einem Endabschnitt eine Verjüngung, ähnlich einem Kugelschreiber, auf, wobei an dem Endabschnitt eine Durchgangsöffnung vorgesehen ist, durch welche das Distanzelement zumindest abschnittsweise hindurchgeführt ist. Beispielsweise ist der Hülsenkörper und/oder das endseitige weitere Abstützmittel des Hülsenkörpers als Spritzgussbauteil ausgebildet.

Es ist möglich, dass an wenigstens einem ersten Endbereich des Hülsenkörpers ein erstes Abstützmittel und an einem zweiten, dem ersten Endbereich gegenüberliegenden Endbereich ein weiteres Abstützmittel angeordnet oder ausgebildet sind, wobei die wenigstens zwei Abstützmittel eingerichtet sind, das Distanzelement zu dem Hülsenkörper zumindest abschnittsweise abzustützen. Dadurch, dass das Distanzelement an beiden Enden des Hülsenkörpers jeweils über ein Abstützmittel abgestützt ist, wird das Spiel in der Lagerung des Distanzelement auf ein Minium reduziert.

In einer bevorzugten Ausführungsform weist die Trageinrichtung einen Adapter auf, der eingerichtet ist, die Vorrichtung an eine Tiefenanschlagschnittstelle einer Bohrmaschine und/oder an eine Tiefenanschlagschnittstelle einer Griffeinrichtung einer Bohrmaschine, zu befestigen. Ein Tiefenanschlag einer Bohrmaschine besteht typischerweise aus einem stabförmigen Körper der eine Querschnittsform aufweist, die mit einer Querschnittsform einer Tiefenanschlagausnehmung der Bohrmaschine oder einer Griffeinrichtung der Bohrmaschine korrespondiert. In der Tiefenanschlagausnehmung ist der stabförmige Körper beweglich bzw. verschiebbar und arretierbar gelagert. Optional kann die Griffeinrichtung ein Arretiermittel umfassen, vermittels dem der Tiefenanschlag, also der stabförmige Körper, relativ zu der Griffeinrichtung befestigbar, insbesondere arretierbar, ist. Durch das Lösen bzw. das Herausnehmen des Tiefenanschlags, also des stabförmigen Körpers, aus dessen Aufnahmeöffnung bzw. durch das Freilegen der Aufnahmeöffnung des Tiefenanschlags, kann diese Aufnahmeöffnung zur Aufnahme einer Adapterhervorhebung des Adapters genutzt werden. Diese Adapterhervorhebung kann beispielsweise zumindest abschnittsweise in die Aufnahmeöffnung eindringen und im zumindest abschnittsweise eingedrungenen Zustand durch das Arretiermittel der Griffeinrichtung bzw. der Bohrmaschine oder durch ein anderes Fixiermittel dort fixiert werden. Mit anderen Worten kann die Aufnahmeöffnung des stabförmigen Tiefenanschlags dazu genutzt werden, die hierin beschriebene Vorrichtung, insbesondere die Trageinrichtung, in eine relativ zu der Bohrmaschine feste Relativposition zu verbringen.

Optional kann es vorgesehen sein, dass der vorrichtungsseitige Adapter einen Aufnahmebereich aufweist, welcher mit einer Hervorhebung der Bohrmaschine und/oder mit einer Hervorhebung einer an der Bohrmaschine befestigbaren Griffeinrichtung befestigbar ist. D. h. z. B., dass über einen, insbesondere korrespondierenden, Kontakt bzw. eine Befestigung eines adapterseitigen Aufnahmebereichs mit einer bohrmaschinenseitigen und/oder griffeinrichtungsseitigen Hervorhebung, eine Fixierung der Trageinrichtung an der Bohrmaschine und/oder an einer Griffeinrichtung ausführbar ist. So ist es beispielsweise möglich, dass ein Stiftkörper in eine bohrmaschinenseitige und/oder griffeinrichtungsseitige Aufnahmeausnehmung, welche für die Aufnahme eines, insbesondere handelsüblichen, Tiefenbegrenzer vorgesehen ist, anstelle des Tiefenbegrenzers eingesetzt wird und über diesen Stiftkörper ein vorrichtungsseitiger Adapter befestigbar ist. Alternativ kann anstelle des Tiefenbegrenzers in dessen Aufnahmeausnehmung ein Stiftkörper eingesetzt werden, der Bestandteil des Adapters ist. Allgemein kann damit die in handelsüblichen Griffeinrichtungen und/oder Bohrmaschinen vorgehaltenen Schnittstellen für einen Tiefenbegrenzer, z. B. für die Form eines Sechskants aufweisende Stabkörper, zur Befestigung der Vorrichtung, insbesondere zur Befestigung eines vorrichtungsseitigen Adapters, eingesetzt werden. Damit wird eine Nachrüstung einer handelsüblichen Bohrmaschine mit der hierin beschriebenen Vorrichtung auf einfache und komfortable Weise ermöglicht.

Es ist möglich, dass ein Vorspannmittel, das den Begrenzungskörper in eine vordefinierte Position relativ zu der Trageinrichtung vorspannt. Dadurch, dass im äußerlich nicht beeinflussten Zustand der Begrenzungskörper in einer vordefinierten Position vorliegt, kann das Einstellen einer definierten relativen Position zwischen Begrenzungskörper, Distanzelement und Bohrmaschine auf komfortable und einfache Weise eingestellt werden. Ferner ist durch das Vorspannen des Begrenzungskörpers, dieser auch in einer vordefinierten Lage relativ zu der Trageinrichtung vorliegend. Bevorzug spannt das Vorspannmittel den Begrenzungskörper in eine Endlagenposition - also in eine definierte, an einem Ende eines möglichen Bewegungswegs vorgegebene Lage - vor. Mit anderen Worten meint eine Endlagenposition, dass der Begrenzungskörper an einem Ende seines durch angrenzende Bauteile (z. B. durch die Trageinrichtung, insbesondere durch den Hülsenkörper) vorgegebenen Bewegungsweg positioniert ist. Das Vorspannmittel kann als elastisches Element ausgebildet sein, welches den Begrenzungskörper in eine definierte Position vorspannt. Beispielsweise kann das Vorspannmittel als Elastomer und/oder als Feder, z. B. Stahlfeder, ausgebildet sein. Das Vorspannmittel kann beispielsweise als Druckfeder ausgebildet sein. alternativ oder zusätzlich kann das Vorspannmittel als Schraubenfeder ausgebildet sein, d. h. z. B. bestehend aus einem in Schraubenform gewundenen Federdraht. Bevorzugt kann das Vorspannmittel als Schraubenzug- oder als Schraubendruckfeder ausgebildet sein. Der Abstützkörper und/oder wenigstens ein Abstützmittel kann beispielsweise als Widerlager bzw. als Angriffsfläche für das Vorspannmittel dienen. Damit kann ein Ende des Vorspannmittels an dem weiteren Abstützmittel oder an dem Abstützkörper anliegen und das gegenüberliegende Ende des Vorspannmittels, bevorzugt unmittelbar, in Kontakt mit dem Begrenzungskörper stehen.

In einer optionalen Ausführungsform spannt das Vorspannmittel den Begrenzungskörper in eine Position des Begrenzungskörpers vor, die im bestimmungsgemäßen Betrieb einer mit der Vorrichtung ausgestatteten Bohrmaschine, einem zu bohrenden Bohrloch zugewandt ist. Mit anderen Worten befindet sich der Begrenzungskörper in seiner durch das Vorspannmittel vorgespannten Position in einer dem zu bohrenden Bohrloch zugewandten und/oder nächstgelegenen Position.

Optional kann das Vorspannmittel zumindest abschnittsweise, bevorzugt überwiegend, besonders bevorzugt vollständig, in dem Aufnahmeraum angeordnet sein. Damit wird es erreicht, dass das Vorspannmittel zumindest abschnittsweise, bevorzugt überwiegend, besonders bevorzugt vollständig, durch den Hülsenkörper umhaust wird bzw. einen Schutz vor mechanischen Einflüssen aufweist. Bevorzugt kann das Vorspannmittel eine längliche Form aufweisen, wobei eine Längsachse des Vorspannmittels parallel, insbesondere koaxial, zu einer Längsachse der Trageinrichtung und/oder zu einer Längsachse des Hülsenkörpers und/oder zu einer Längsachse des Distanzelement ausgerichtet ist.

Auch kann das Vorspannmittel beispielsweise einen Hohlraum definieren bzw. umgeben, in welchem das Distanzelement zumindest abschnittsweise aufgenommen oder aufnehmbar ist. Mit anderen Worten umgibt das Vorspannmittel das Distanzelement zumindest abschnittsweise bzw. ist das Distanzelement in dem Hohlraum des Vorspannmittels zumindest temporär beweglich aufgenommen. Das Distanzelement kann eine das Vorspannmittel stabilisierende Funktion umfassen, da dadurch, dass das Distanzelement in dem Hohlraum des Vorspannmittels angeordnet ist, die Gefahr eines Knickens des Vorspannmittels reduziert wird, da das Vorspannmittel nach radial innen im Falle einer Verformung bzw. eines Einknickens des Vorspannmittels, eine Abstützung durch den im Hohlraum des Vorspannmittels aufgenommenen Abschnitt des Distanzelement erfährt. Dies erhöht die Zuverlässigkeit der Vorrichtung.

Auch bei einem Einfädeln des, insbesondere stabförmigen, Distanzelements in den Aufnahmeraum des Hülsenkörpers kann es von Vorteil sein, wenn zugleich das in den Aufnahmeraum eingeführte Distanzelement in einen Hohlraum des Vorspannmittels eingeführt wird. Da das Vorspannmittel radial zwischen dem Distanzelement und dem Hülsenkörper angeordnet ist, kann das Vorspannmittel als Querschnittsverengung bzw. als Zentrier- und/oder Führungselement für ein in den Aufnahmeraum des Hülsenkörpers eingeführtes Distanzelement dienen, insbesondere solange, bis das Distanzelement eine Abstützung über ein Abstützmittel und/oder einen Abstützkörper erfährt.

Die Trageinrichtung, insbesondere ein Hülsenkörper der Trageinrichtung, kann beispielsweise eine Skala aufweisen, welche im bestimmungsgemäßen Betrieb der Vorrichtung mit dem Begrenzungskörper eine Bohrtiefeninformation anzeigt. Hierzu kann der Begrenzungskörper eine Markierung, z. B. einen Zeiger, umfassen, welche während dem Ausführen eines Bohrprozesses zusammen mit der Skala eine optisch erfassbare Information zur Eindringtiefe des Bohrers und/oder zum Fortschritt des Bohrprozesses ausgeben kann. Bevorzugt ist die Skala auf Höhe bzw. nebenstehend zu der Bohrmaschine angeordnet, sodass das Ablesen, aufgrund der Nähe zu den Augen des Nutzers der Bohrmaschine, erleichtert wird. Die Skala ist vorzugsweise an der Trageinrichtung, insbesondere an dem Hülsenkörper angeordnet. Damit liegt eine relativ zur Bohrmaschine unbewegliche Anordnung der Skala vor, d. h. es wird keine Relativbewegung zwischen der Skala und der Bohrmaschine während des Bohrprozesses ausgeführt. Damit wird die Ablesbarkeit der Skala für eine die Bohrmaschine handhabende Person erleichtert, da es zu keiner Relativbewegung zwischen Skala und Handgriff der Bohrmaschine kommt.

Die Trageinrichtung, insbesondere der Hülsenkörper, und/oder der Begrenzungskörper und/oder der Anschlagkörper kann bzw. können derart über eine Schnittstelle einer Bohrmaschine an der Bohrmaschine befestigbar sein bzw. sind entsprechend befestigt, dass die Trageinrichtung, insbesondere der Hülsenkörper, und/oder der Begrenzungskörper und/oder der Anschlagkörper überwiegend, bevorzugt ausschließlich, an einer dem zu bohrenden Bohrloch abgewandten Seite der Schnittstelle befestigt oder befestigbar sind. Dies kann beispielsweise dadurch erzielt werden, dass eine Anbindung der Vorrichtung an der Bohrmaschine zwischen einem Motorkörper der Bohrmaschine und einem Bohrfutter der Bohrmaschine erfolgt, wobei die Trageinrichtung und/oder der Hülsenkörper zumindest abschnittsweise, bevorzugt überwiegend, besonders bevorzugt ausschließlich, auf der dem Motorkörper zugewandten und/oder auf der dem Bohrfutter abgewandten Seite des Verbindungsabschnitts angeordnet ist bzw. sind. Die Trageinrichtung, insbesondere der Hülsenkörper, kann beispielsweise derart an die Bohrmaschine befestigt oder befestigbar sein, dass es zu keiner Überdeckung oder zu keiner seitlichen Überschneidung mit einem Bohrfutter der Bohrmaschine kommt. Dies ist mit dem Vorteil verbunden, dass auch relativ kurze und/oder dünne Bohrer in einer mit der Vorrichtung ausgestatteten Bohrmaschine eingesetzt werden können, da es zu keinem Überstand der starr an der Bohrmaschine anzusetzenden Bauteile der Vorrichtung kommt. Damit kann eine Störgeometrie der Vorrichtung bei dem Einsatz von kleinen oder kurzen Bohrern in der mit der Vorrichtung ausgestatteten Bohrmaschine eingesetzt werden.

Beispielsweise ist der Begrenzungskörper vermittels einer Arretiereinrichtung an dem Distanzelement arretierbar, wobei die Arretiereinrichtung eine kraft- und/oder formschlüssige Arretierung des Begrenzungskörpers, insbesondere unmittelbar, an, z. B. auf, dem Distanzelement ermöglicht. Die Arretiereinrichtung kann beispielsweise zumindest ein Federelement umfassen, das ein Sperrmittel der Arretiereinrichtung in eine, eine Relativbewegung zwischen dem Distanzelement und dem Begrenzungskörper sperrende Arretierstellung vorspannt. Mit anderen Worten würde die Arretiereinrichtung, im Falle eines nicht äußerlichen, z. B. manuellen, Einwirkens, eine Bewegbarkeit des Distanzelements zu dem Begrenzungskörper unterbinden bzw. sperren. Die Arretiereinrichtung kann beispielsweise eine Schraube aufweisen, sodass durch Festschrauben oder Lösen der Schraube zwischen einer Freigabe- und einer Sperrstellung für eine Relativbewegung von Distanzelement und Begrenzungskörper, gewechselt werden kann. Die Schraube kann auch eine Handhabe aufweisen (z. B. eine Flügelschraube oder ähnliches), sodass die Schraube werkzeuglos zwischen der Freigabe- und der Sperrstellung bewegbar ist. Auch ist es möglich, dass die Arretiereinrichtung einen mechanischen Schalter oder einen mechanischen Taster umfasst, der im Zuge einer manuellen Betätigung ein mechanisches Umschalten zwischen der Freigabe- und Sperrstellung ermöglicht.

Optional kann die Vorrichtung einen Aufsetzkörper umfassen, welcher an dem Distanzelement angeordneten oder anordenbar ist, wobei der Aufsetzkörper auf einem Bohrgut flächig aufsetzbar ist. alternativ oder zusätzlich kann die Vorrichtung einen Bohrstaubsammler mit (a) einer dicht an der Bohrmaschine anbringbaren Maschinenkupplung, deren Abstand zum Aufsetzkörper veränderbar ist und (b) eine Außenhülle, welche mit der Maschinenkupplung und dem Aufsetzkörper dichtend verbindet oder verbindbar ist sowie (c) eine innerhalb der Außenhülle angeordnete, dichtend an der Maschinenkupplung angebrachte, eine Bohreröffnung aufweisende Bohrfutterhülle. Durch einen derartigen Aufbau wird ein Verteilen von während des Bohrprozesses an und aus dem Bohrloch gebildeter Bohrstaub verhindert.

Der Begrenzungskörper kann beispielsweise gleitend an, insbesondere in, der Trageinrichtung, insbesondere in einem Aufnahmeraum einer einen Hülsenkörper umfassenden Trageinrichtung, gelagert sein. Damit kann eine Lagerung des Distanzelements zumindest teilweise und/oder zumindest temporär über den Kontakt des Distanzelements mit dem Begrenzungskörper und einem Kontakt des Begrenzungskörpers mit der Trageinrichtung, insbesondere mit dem Hülsenkörper, ermöglicht werden.

Der Begrenzungskörper und/oder der Anschlagkörper kann beispielsweise verliersicher an der Trageinrichtung beweglich gelagert sein. Alternativ oder zusätzlich kann das Distanzelement verliersicher an der Trageinrichtung, bevorzugt an einer als Hülsenkörper ausgebildeten Trageinrichtung, angeordnet sein. Bevorzugt ist die Verliersicherung des Distanzelements derart ausgebildet, dass das Distanzelement im relativ zur Trageinrichtung, insbesondere relativ zum Hülsenkörper, bewegbaren Zustand, verliersicher befestigt ist. So kann das Distanzelement beispielsweise eine senkrecht zu dessen Längsachse verlaufende Hervorhebung aufweisen, welche ein Durchfädeln des Distanzelements an wenigstens einer Öffnung zum Durchführen des Distanzelements an wenigstens einem Abstützmittel und/oder einem Abstützkörper verhindert. Mit anderen Worten bildet die Hervorhebung einen Bewegungsbegrenzer für die Bewegbarkeit des Distanzelements relativ zu der Trageinrichtung. Die Hervorhebung kann als einstückiger Abschnitt des Distanzelements und/oder als an dem Distanzelement befestigtes Element vorgesehen sein. Bevorzugt kann der Bewegungsbegrenzer bzw. die Hervorhebung ein Herausziehen des Distanzelements in wenigstens eine Längsrichtung des Distanzelements verhindern, besonders bevorzugt wird ein Herausbewegen in beide Längsrichtungen des Distanzelements durch zumindest einen Bewegungsbegrenzer bzw. durch entsprechende Hervorhebungen verhindert bzw. unterbunden.

Das Distanzelement kann beispielsweise verdrehsicher an der Trageinrichtung und/oder verdrehsicher an dem Begrenzungskörper angeordnet, insbesondere gelagert, sein. Die Verdrehsicherung kann beispielsweise dadurch erzielt werden, dass eine Aufnahmeöffnung der Trageinrichtung und/oder des Begrenzungskörpers eine Querschnittsform aufweist, welche mit einer Querschnittsform des Distanzelements derart korrespondiert, dass eine relative Verdrehung, insbesondere um die Längsachse des Distanzelements, des Distanzelements zu der Trageinrichtung und/oder zu dem Begrenzungskörper nicht ausführbar ist. alternativ oder zusätzlich kann der Anschlagkörper (a) unverlierbar und/oder (b) in einem beweglichen Zustand verdrehsicher an der Trageinrichtung, insbesondere an dem Hülsenkörper, befestigt bzw. gelagert.

Neben der Vorrichtung betrifft die Erfindung ein Verfahren zur Begrenzung einer Bohrtiefe für eine Bohrmaschine unter Verwendung einer hierin beschriebenen Vorrichtung. Das Verfahren kann es beispielsweise vorsehen, dass in einem ersten Verfahrensschritt ein Bohrer in ein Bohrfutter einer Bohrmaschine eingesetzt bzw. fixiert wird. Sodann wird die Spitze des Bohrers an ein Bohrgut, z. B. an eine ebene Fläche eines Bohrguts, angesetzt. Im angesetzten Zustand des Bohrers an dem Bohrgut wird das Distanzelement, im nicht mit dem Begrenzungskörper fixierten Zustand, mit seinem freien Ende an das Bohrgut angesetzt bzw. mit dem Bohrgut in Kontakt gebracht und sodann das Distanzelement mit dem Begrenzungskörper, z. B. vermittels der Arretiereinrichtung, fixiert. Mit anderen Worten ein auf Null stellen bzw. ein 0 Punkt setzen dadurch, dass die Spitze des Bohrers und das freie Ende des Distanzelements in eine gemeinsame Ebene gebracht werden und in diesem Zustand ein Fixieren des Begrenzungskörpers mit dem Distanzelement erfolgt. Das Ausführen eines Eindringens des Bohrers in das Bohrgut führt folglich durch den Kontakt des freien Endes des Distanzelements zu einem Zurückdrücken des Begrenzungskörpers und des Distanzelements bzw. zu einer Bewegung des Begrenzungskörpers und des Distanzelements in die von dem Bohrgut entgegengesetzte Richtung. Vor oder nach oder gleichzeitig zu dem Einsetzen eines Bohrers in die Bohrmaschine und/oder vor oder nach oder gleichzeitig zu einem auf Null setzen des Distanzelements und Begrenzungskörpers (Nullpunktlage) kann der Anschlagkörper in einer gewünschten Position an, d. h. z. B. in oder auf, dem Hülsenkörper 9 fixiert werden. Diese gewünschte Position weist einen Abstand von dem Ausgangszustand des Begrenzungskörpers auf, wobei dieser Abstand der eingestellten begrenzten bzw. vorgegebenen maximalen Eindringtiefe der des Bohrers durch die Vorrichtung entspricht. Es kommt bei Erreichen der maximalen Eindringtiefe zu einem Kontakt von Begrenzungskörper und Anschlagkörper, wobei durch den Kontakt ein weitergehendes Einfahren des Distanzelements verhindert wird und damit auch ein weitergehendes Eindringen des Bohrers in das Bohrgut unterbunden wird. Um die Einstellung der Bohrtiefe bzw. der maximalen Eindringtiefe des Bohrers in das Bohrgut vermittels der Vorrichtung zu vereinfachen, kann die Vorrichtung mit einer Skala ausgestattet sein, vermittels der aufgrund der Position des Anschlagkörpers zu der Skala erkennbar ist, auf welchen Wert der Bohrtiefe bzw. der maximalen Eindringtiefe die Vorrichtung eingestellt ist.

Damit wird es erreicht, dass vermittels weniger Handgriffe die Vorrichtung auf eine gewünschte maximale Eindringtiefe eingestellt werden und zugleich die Vorrichtung mit wenigen Bauteilen realisiert und mit hoher Zuverlässigkeit arbeiten kann. Beispielsweise werden mit der hierin beschriebenen Vorrichtung keine weiteren Messmittel zum Einstellen der maximalen Eindringtiefe bzw. zur Bohrtiefe benötigt.

Sämtliche Vorteile, Einzelheiten, Ausführungen und/oder Merkmale der erfindungsgemäßen Vorrichtung sind auf das erfindungsgemäße Verfahren übertragbar bzw. anzuwenden.

Die Erfindung ist anhand von Ausführungsbeispielen in den Zeichnungen näher erläutert. Dabei zeigt:
Fig. 1 eine schematische Darstellung einer Vorrichtung gemäß einem Ausführungsbeispiel in einer Ausgangsstellung;
Fig. 2 eine schematische Darstellung einer Vorrichtung gemäß Figur 2 in einer ein Bohrloch in einen Gegenstand eingebrachten Stellung;
Fig. 3 eine schematische Darstellung einer Vorrichtung gemäß einer weiteren Ausführungsform;
Fig. 4 eine perspektivische Prinzipdarstellung einer mit einer Vorrichtung bestückten Bohrmaschine, wobei die Vorrichtung in dieser Ausführungsform mit einem Aufsetzkörper und einem Bohrstaubsammler ausgestattet ist;
Fig. 5 eine perspektivische Prinzipdarstellung einer Vorrichtung gemäß Figur 4 aus einer Blickperspektive einer die Bohrmaschine haltenden Person;
Fig. 6 eine perspektivische Darstellung eines von einem Halter gelösten Hülsenkörpers einer Trageinrichtung gemäß einer weiteren Ausführungsform;
Fig. 7 eine perspektivische Darstellung des Zuführens eines Vorspannmittels in den Innenraum des Hülsenkörpers gemäß Figur 6;
Fig. 8 eine perspektivische Darstellung des Zuführens eines Abschlusskörpers an den Hülsenkörper gemäß Figur 6;
Fig. 9 eine schematische Darstellung der Vorrichtung gemäß einer weiteren Ausführungsform.

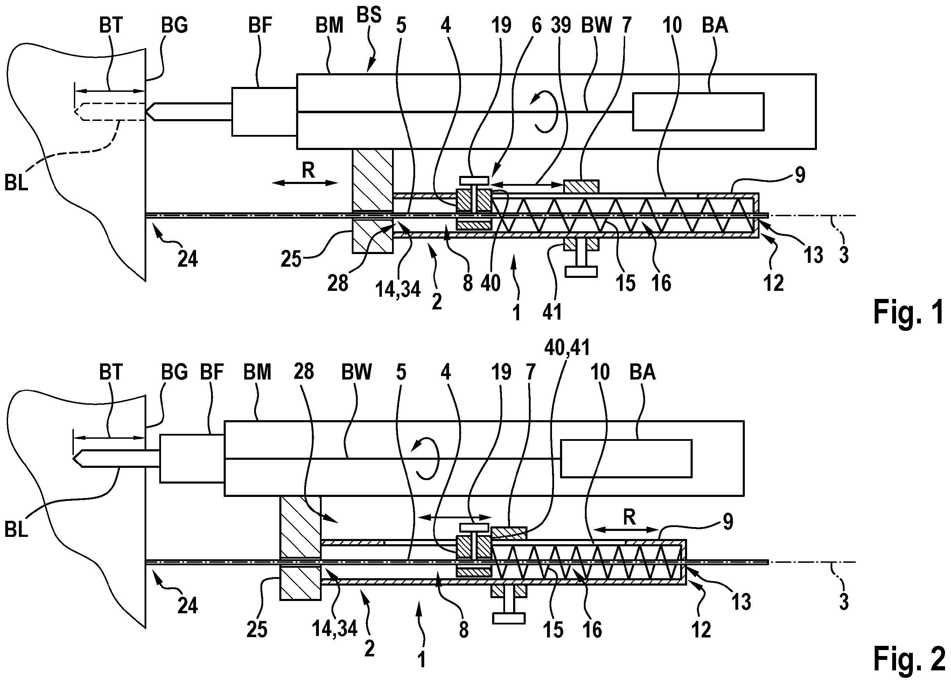

In den Figuren ist eine Vorrichtung 1 zur Begrenzung einer Bohrtiefe BT für eine Bohrmaschine BM gezeigt, hierbei wird eine in einer festen Relativposition R zu einer Bohrmaschine BM platzierbare, eine Längsachse 3 definierende Trageinrichtung 2 an die Bohrmaschine BM befestigt. Die Trageinrichtung 2 kann lösbar oder unlösbar an der Bohrmaschine BM befestigt sein. Eine unlösbare Befestigung bedeutet, dass die Trageinrichtung 2 nicht zerstörungsfrei von der Bohrmaschine BM gelöst werden kann. Die Vorrichtung 1 umfasst ferner einen an der Trageinrichtung 2 relativ zu dieser entlang der Längsachse 3 verschiebbar geführten Begrenzungskörper 4, vorzugsweise ist der gleitend und unverlierbar an der Trageinrichtung 2, insbesondere an, d. h. in oder auf, einem Hülsenkörper 9 der Trageinrichtung 2 gelagert. Ferner ist ein Distanzelement 5 am Begrenzungskörper 4 entlang der Längsachse 3 verschiebbar und arretierbar gehalten. Beispielsweise bildet der Kontakt zwischen Distanzelement 5 und Begrenzungskörper 4 eine zumindest temporäre längsbewegliche Lagerung des Distanzelements 5 an der Trageinrichtung 2. Im arretierten Zustand von Distanzelement 5 und Begrenzungskörper 4 werden diese beiden Teile gemeinsam relativ zu der Trageinrichtung 2 bewegt. Ferner umfasst die Vorrichtung 1 einen an der Trageinrichtung 2 in wenigstens einer Position entlang der Längsachse arretierbar gehaltenen Anschlagkörper 7, wobei die Vorrichtung 1 eingerichtet ist, durch Kontakt des Begrenzungskörpers 4 mit dem Anschlagkörper 7 eine vordefinierte Bohrtiefe BT zu begrenzen. Mit anderen Worten ist der Anschlagkörper 7, insbesondere wechselweise, in wenigstens einer ersten und zumindest einer zweiten Position entlang der Längsachse 3 arretierbar gehaltenen bzw. temporär arretierbar gelagert. Folglich kann der Anschlagkörper 7 in wenigstens einer ersten und in wenigstens einer zweiten Position relativ zu dem Distanzelement 5 arretiert werden. Wenn der auf der Trageinrichtung 2 arretierte Anschlagkörper 7 mit dem an dem Distanzelement 5 arretierten Begrenzungskörper 4 in Kontakt tritt, ist eine Bewegung des Distanzelements 5 relativ zu der Bohrmaschine BM, insbesondere zu einem in der BM angeordneten Bohrer, in wenigstens eine Richtung gehemmt, sodass das Distanzelement 5 mit seinem dem Bohrgut BG zugewandten freien Ende mit dem Bohrgut BG in Kontakt tritt und eine weitergehende Zuführbewegung von Bohrmaschine BM und Bohrgut BG hemmt. Durch den Abstand, s. Doppelpfeil 39, zwischen dem Anschlagkörper 7 und dem Begrenzungskörper 4 kann eine Bohrtiefe BT bzw. eine maximale Eindringtiefe des Bohrers in das Bohrgut BG vorgegeben werden. Durch den Kontakt der zueinander weisenden Kontaktflächen 40, 41 des Anschlagkörpers 7 und des Begrenzungskörpers 4 wird ein weitergehendes Eindringen des Bohrers in das Bohrgut BG verhindert und damit begrenzt, vgl. Figur 2.

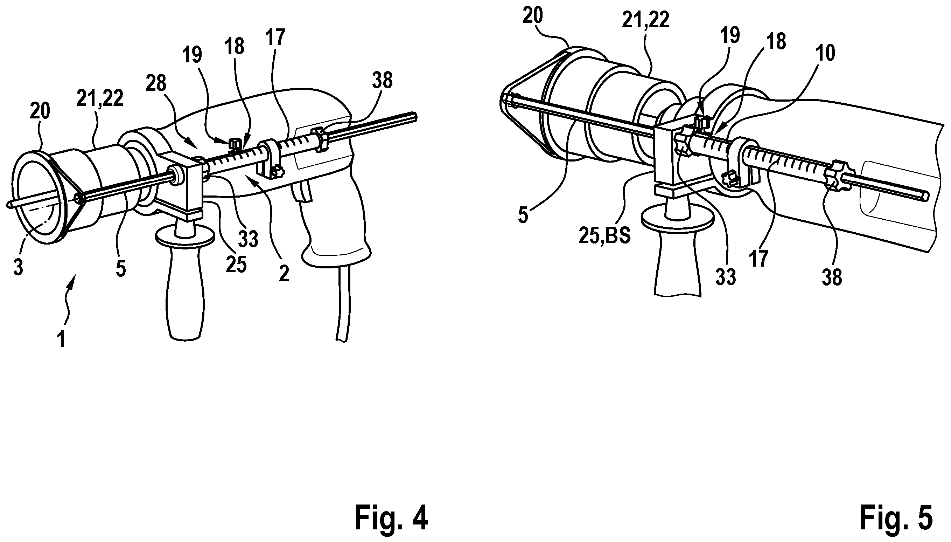

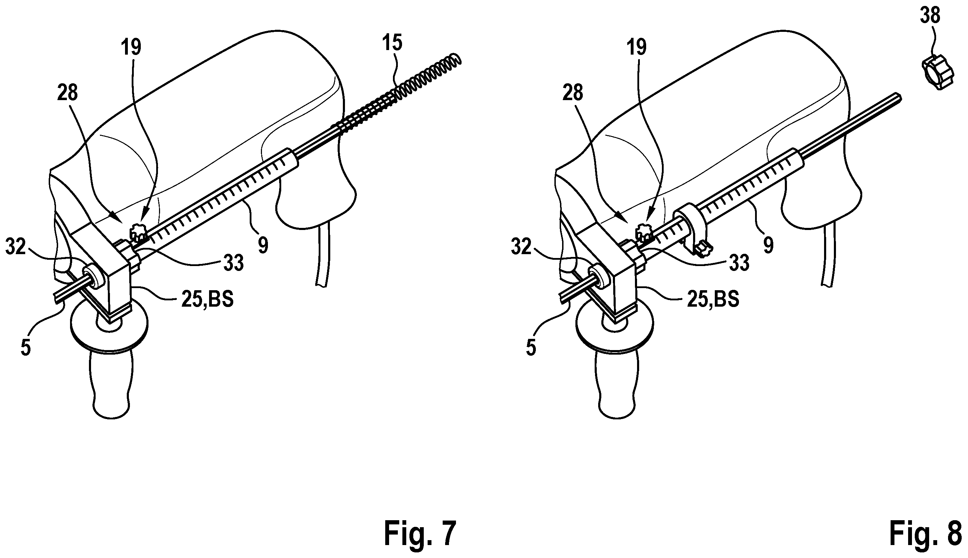

Die Trageinrichtung 2 kann beispielsweise einen, einen Aufnahmeraum 8 aufweisenden Hülsenkörper 9 umfassen, wobei in dem Aufnahmeraum 8 des Hülsenkörpers 9 der Begrenzungskörper 4 und/oder das Distanzelement 5 zumindest abschnittsweise angeordnet ist bzw. sind. Der Hülsenkörper 9 kann eine Lochstruktur 10 aufweisen, wobei der Begrenzungskörper 4 die Lochstruktur 10 zumindest abschnittsweise durchgreift. Die Lochstruktur 10 kann, wie beispielsweise in den Figuren dargestellt, eine, insbesondere geradlinige, Langlochform aufweisen. Wie insbesondere in den Figuren 7 und 8 ersichtlich, kann die Lochstruktur durch ein zumindest abschnittsweise, bevorzugt überwiegend, besonders bevorzugt vollständig, geschlitzten Hülsenkörper 9 gebildet werden. Die Begrenzung der Lochstruktur 10 kann beispielsweise vermittels eines weiteren Abstützmittels 13 erfolgen. Vorzugsweise ist im an der Bohrmaschine BM montierten Zustand der Vorrichtung 1 die Lochstruktur 10 an einer Oberseite und/oder an einer von der Bohrmaschine BM wegweisenden Seite des Hülsenkörpers 9 ausgebildet. Vorzugsweise kann die Lochstruktur 10 zu wenigstens einem Ende des Hülsenkörpers 9 hin offen sein, d. h. das durch die Lochstruktur 10 gebildete Loch ist nach außen hin frei, sodass trotz dem abschnittsweisen Eingreifen des Begrenzungskörpers 4 in die Lochstruktur 10 ein lineares Einführen des Begrenzungskörpers 4 in den Hülsenkörper 9 ermöglicht wird. Dieses freie Ende der Lochstruktur 10 kann durch einen Schraubkörper 38 verschlossen werden, vgl. Figuren 4 und 8. Der Schraubkörper 38 kann beispielsweise ein mit einem Innengewinde versehener Körper sein, der auf einen korrespondierenden Außengewindeabschnitt des Hülsenkörpers 9 aufgeschraubt wird (oder umgekehrt). Alternativ kann das freie Ende der Lochstruktur 10 zum Halter 25 oder zum Adapterkörper 35 weisen und durch den Halter 25 bzw. durch den Adapterkörper 35 verschlossen werden. Vorzugsweise verläuft die Lochstruktur 10 über die gesamte Länge des Hülsenkörpers 9, ist also beidseitig zu den Enden hin offen. Damit wird es erreicht, dass eine ggf. auf dem Hülsenkörper 9 angeordnete Skala 17 und/oder ein in der Lochstruktur 10 sich bewegender Begrenzungskörper 4 für eine die Bohrmaschine BM handhabende Person komfortabel betrachtet werden kann.

Der Hülsenkörper 9 kann beispielsweise an einem Halter 25 der Bohrmaschine BM kraft- und/oder form- und/oder stoffschlüssig befestigt sein. Beispielsweise weist der Hülsenkörper 9 einen Gewindeabschnitt, z. B. ein Außengewinde, auf, welches mit einem halterseitigen Gegengewinde, z. B. einem Innengewinde, korrespondiert. So kann der Hülsenkörper 9 beispielsweise an den Halter 25 angeschraubt werden. Alternativ oder zusätzlich kann der Hülsenkörper 9 vermittels einer Klemm- und/oder Rastverbindung (nicht dargestellt), z. B. durch das Vorsehen einer Rastnase, welche in eine Gegenraststruktur rastet, an dem Halter 25 bzw. an dem Adapterkörper 35 fixiert werden.

Im Aufnahmeraum 8 des Hülsenkörpers 9 kann beispielsweise ein Abstützkörper angeordnet oder ausgebildet sein, der eingerichtet ist, das Distanzelement 5 zu dem Hülsenkörper 9 zumindest abschnittsweise abzustützen. Der Abstützkörper kann ortsfest zum Hülsenkörper 9 oder beweglich, insbesondere längsbeweglich, relativ zu dem Hülsenkörper 9 gelagert sein. So ist es beispielsweise möglich, dass der Abstützkörper als Hülse ausgebildet ist, die längsbeweglich in dem Aufnahmeraum 8 des Hülsenkörper 9, insbesondere gleitend, gelagert ist. Unabhängig von einer etwaigen Bewegbarkeit des Abstützkörpers zu dem Hülsenkörper 9, ist das Distanzelement 5 zumindest abschnittsweise durch den Abstützkörper von dem Hülsenkörper 9 abgestützt.

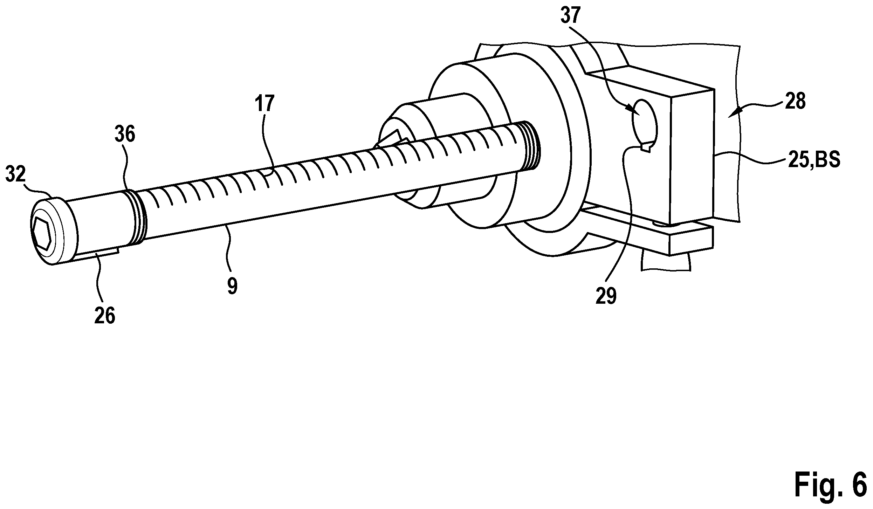

An wenigstens einem Endbereich 12 des Hülsenkörpers 9, bevorzugt an einem dem zu bohrenden Bohrloch BL abgewandten Endbereich 12 des Hülsenkörpers 9, kann beispielsweise ein weiteres Abstützmittel 13 angeordnet oder ausgebildet sein, das eingerichtet ist, das Distanzelement 5 zu dem Hülsenkörper 9 zumindest abschnittsweise abzustützen. Das weitere Abstützmittel 13 kann beispielsweise als Endkappe ausgebildet sein und an einem dem Bohrloch BL abgewandten Endbereich 12 des Hülsenkörpers 9 kraft- und/oder form- und/oder stoffschlüssig an dem Hülsenkörper 9 befestigt sein. Beispielsweise weist - wie in den Figur 6 bis 8 ersichtlich - der Hülsenkörper 9 an seinem dem Bohrloch BL abgewandten Endbereich 12 ein Außengewinde auf, an welches das weitere Abstützmittel 13 (z. B. 38 Schraubkörper) über ein korrespondierendes Innengewinde anschraubbar ist. Selbstverständlich kann die Gewindekonfiguration zwischen dem weiteren Abstützmittel 13 und dem Endbereich 12 des Hülsenkörper 9 auch umgekehrt ausgestaltet sein.

In einer bevorzugten Ausführungsform ist das Distanzelement 5 über den Begrenzungskörper 4 und über ein Abstützmittel 14, welches an einem Halter 25 und/oder an einem Adapterkörper 35 angeordnet oder ausgebildet ist, abgestützt. Dies ermöglicht eine einfache Abstützung des Distanzelements 5 unter Verwendung weniger Bauteile. Alternativ oder zusätzlich kann die Abstützung des Distanzelements 5 an dem Halter 25 und/oder an dem Adapterkörper 35 und/oder an dem Begrenzungskörper 4 als, insbesondere geradliniger, Kanal ausgebildet sein, vgl. Figuren 1 bis 3.

An wenigstens einem ersten Endbereich 12 des Hülsenkörpers 9 kann beispielsweise ein weiteres Abstützmittel 13 und an einem zweiten, dem ersten Endbereich 12 gegenüberliegenden Endbereich 34 ein erstes Abstützmittel 14 angeordnet oder ausgebildet sein, wobei beispielsweise die wenigstens zwei Abstützmittel 13, 14 eingerichtet sind, das Distanzelement 5 zu dem Hülsenkörper 9 zumindest abschnittsweise abzustützen. Das weitere Abstützmittel 13 kann beispielsweise an einem dem Bohrloch BL abgewandten Ende des Hülsenkörpers 9 und das erste Abstützmittel 14 an dem dem Bohrloch BL zugewandten Ende des Hülsenkörpers 9 angeordnet oder ausgebildet sein. Das erste Abstützmittel 14 kann kraft- und/oder form- und/oder stoffschlüssig mit dem Hülsenkörper 9 verbindbar sein. Das erste Abstützmittel 14 kann beispielsweise durch eine Durchtrittsöffnung des Halters 25 gebildet werden, vgl. Figuren 1 und 2 oder durch eine Durchtrittsöffnung des Adapterkörpers 35. Eine optionale weitere Abstützung des Distanzelements 5 oder eine optionale Abstützung anstelle des weiteren Abstützmittels 13 kann durch den Begrenzungskörper 4 bzw. durch die Lagerung des Begrenzungskörpers 4 an, d. h. z. B. in, dem Hülsenkörper 9 erreicht werden.

In der in den Figuren 6 bis 8 gezeigten Ausführungsform wird der Hülsenkörper 9 zunächst durch eine Öffnung eines Halters 25 gesteckt, wobei ein Gewindeabschnitt 26 im Endmontagezustand auf der, der Zuführseite gegenüberliegenden Seite der Öffnung 37 des Halters 25 positioniert ist und ein Schraubmittel 33, z. B. eine Überwurfmutter, zur Fixierung des Hülsenkörpers 9 auf den Gewindeabschnitt 36 aufgeschraubt wird. Damit wird der Hülsenkörper 9 durch seine einendseitige Verdickung 32 und durch das Schraubmittel 33 beidseitig der Öffnung 37 des Halters 25 kraft- und/oder formschlüssig fixiert, insbesondere geklemmt. Alternativ kann der Hülsenkörper 9 vermittels einer Klemm- und/oder Rastverbindung, z. B. durch das Vorsehen einer Rastnase, welche in eine Gegenraststruktur rastet, an dem Halter 25 bzw. an dem Adapterkörper 35 fixiert werden. Die Öffnung 37 des Halters 25 bzw. des Adapterkörpers 35 kann mit dem montierten Hülsenkörper 9 eine verdrehgesicherte Verbindung eingehen. So kann die Öffnung 37 des Halters 25 bzw. des Adapterkörpers 35 beispielsweise eine Nut 29 oder ein Gegenelement aufweisen, in welches ein hülsenkörperseitiges Eingriffselement 26 derart eingreift, dass eine Drehbewegung zwischen dem Hülsenkörper 9 und dem Halter 25 bzw. dem Adapterkörper 35 verhindert wird (Verdrehsicherung). Der Halter 5 kann einen Bestandteil der Vorrichtung 1 bilden und als Schnittstelle zur Befestigung der Vorrichtung 1 an einer Befestigungsschnittstelle BS an der Bohrmaschine BM dienen. Beispielsweise ist die Befestigungsschnittstelle BS als kreiszylindrischer Bereich ausgebildet, an welchen der Halter 25 kraft- und/oder formschlüssig fixierbar ist, insbesondere ist der Halter 25 klemmend an der Befestigungsschnittstelle BS befestigbar. Der Halter 25 kann beispielsweise ein Griffelement aufweisen, vgl. Figur 4 oder 5. Es ist möglich, dass das Griffelement mit dem Halter 25 über eine Schraubverbindung verbindbar ist. Die Schraubverbindung des Griffelements am Halter 25 kann optional zum Befestigen des Griffelements am Halter 25 und zum Klemmen des Halters 25 an der Befestigungsschnittstelle BS der Bohrmaschine BM dienen, vgl. Figuren 4 und 5.

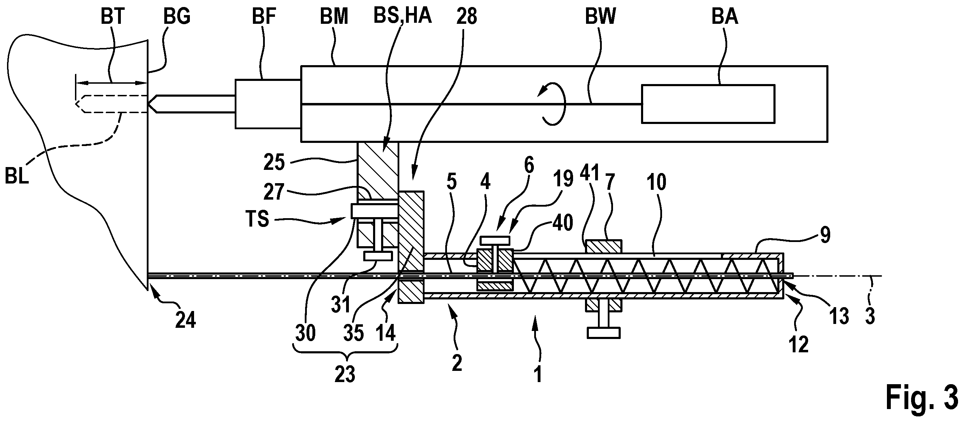

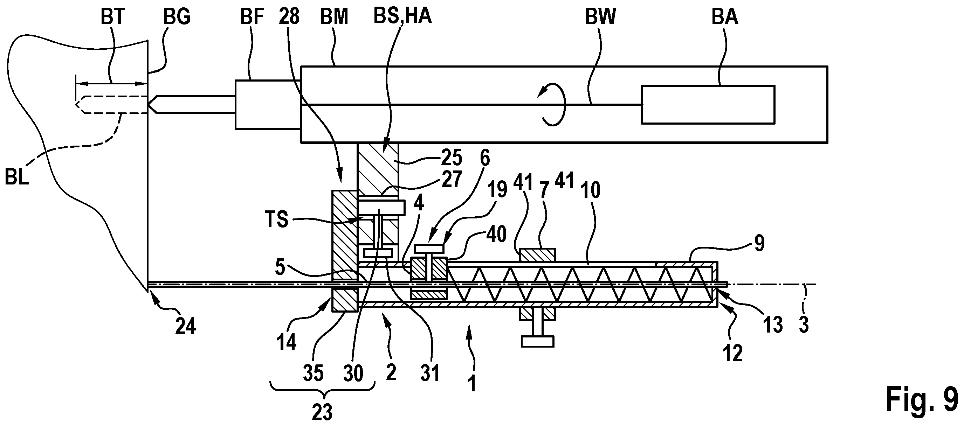

Die Trageinrichtung 2 kann beispielsweise einen Adapter 23 umfassen, der eingerichtet ist, die Vorrichtung 1 an eine Tiefenanschlagschnittstelle TS einer Bohrmaschine BM und/oder an eine Tiefenanschlagschnittstelle TS einer Griffeinrichtung und/oder einem Halter 25 einer Bohrmaschine BM zu befestigen. Wie in Figur 3 gezeigt, kann der Adapter 23 vermittels einer Eingriffshervorhebung 30 in eine Ausnehmung 27 der Bohrmaschine BM, insbesondere in einen Halter 25 einer Bohrmaschine BM, in welche ursprünglich ein, z. B. handelsüblicher und eine sechskantform aufweisender, Tiefenanschlagsstab aufgenommen war, eingesetzt werden. Der Tiefenanschlagsstab wird typischerweise über einen Arretiermechanismus 31 der Tiefenanschlagsschnittstelle TS arretiert. Dieser Arretiermechanismus 31 kann ebenso zur Fixierung des Adapters 23 an der Tiefenanschlagsschnittstelle TS verwendet werden, sodass beispielsweise die Eingriffshervorhebung 30 in der Ausnehmung 27 durch den Arretiermechanismus 31 fixierbar ist bzw. fixiert wird. In der in Figur 3 dargestellten Ausführungsform kann der Adapter 23 einen Adapterkörper 35 aufweisen, an dem der Hülsenkörper 9 fixiert ist. Ferner weist der Adapterkörper 35 eine Eingriffshervorhebung 30 auf, welche in eine Öffnung der Tiefanschlagsschnittstelle TS einbringbar ist. Die Eingriffshervorhebung 30 kann beispielsweise einstückig mit dem Adapterkörper 35 ausgebildet sein. Alternativ kann die Eingriffshervorhebung 30 mit dem Adapterkörper 35 kraft- und/oder stoff- und/oder formschlüssig verbunden sein. Beispielsweise kann die Eingriffshervorhebung 30 als Schraube ausgebildet sein, welche die Öffnung der Tiefenanschlagsschnittstelle TS zumindest abschnittsweise durchdringt und, insbesondere vermittels einer Schraubenmutter, an der Tiefenanschlagsschnittstelle TS befestigt wird. In der in Figur 3 gezeigten Ausführungsform wird die Eingriffshervorhebung 30 von einer dem zu bohrenden Bohrloch BL abgewandten Seite des Halters 25 zugeführt. Alternativ hierzu kann - wie beispielsweise in Figur 9 gezeigt - die Eingriffshervorhebung 30 von der dem Bohrloch BL zugewandten Seite des Halters 25 der Ausnehmung 27 der Tiefenanschlagschnittstelle TS zugeführt werden.

Es ist möglich, dass ein Vorspannmittel 15 den Begrenzungskörper 4 in eine vordefinierte Position 6 relativ zu der Trageinrichtung 2 vorspannt. Bevorzugt spannt das Vorspannmittel 15 den Begrenzungskörper 4 in eine Endlagenposition vor. Das Vorspannmittel 15 kann besonders bevorzugt den Begrenzungskörper 4 in eine Position 6 des Begrenzungskörpers 4 vorspannen, die im bestimmungsgemäßen Betrieb einer mit der Vorrichtung 1 ausgestatteten Bohrmaschine BM einem zu bohrenden Bohrlochs BL zugewandt ist, vgl. Figur 3. Das Vorspannmittel 15 kann beispielsweise als Druckfeder ausgebildet sein, vgl. Figur 7.

Ferner ist es möglich, dass das Vorspannmittel 15 zumindest abschnittsweise, bevorzugt überwiegend, besonders bevorzugt vollständig, in dem Aufnahmeraum 8 der Trageinrichtung 2, insbesondere in einem Aufnahmeraum 8 des Hülsenkörpers 9 angeordnet ist. Bevorzugt weist das Vorspannmittel 15 eine Längsachse auf, die parallel, insbesondere koaxial, zu der Längsachse 3 des Hülsenkörpers 9 verläuft. In einer bevorzugten Ausführungsform weist das Vorspannmittel 15 einen Hohlraum 16 auf bzw. definiert einen solchen, wobei in dem Hohlraum 16 das Distanzelement 5 zumindest abschnittsweise aufgenommen oder aufnehmbar ist. Der Hohlraum 16 in welchem das Distanzelement 5 aufnehmbar ist, kann beispielsweise entlang der Längsachse des Vorspannmittels 15 verlaufen und/oder zentral in dem Vorspannmittel 15 vorliegen. Im Falle eines als Schraubenfeder ausgebildeten Vorspannmittels 15 kann das Distanzelement 5 beispielsweise in dem zentralen, von der Wendelform der Schraubfeder umgebenen Zentralbereich aufgenommen sein.

Die Trageinrichtung 2, insbesondere ein Hülsenkörper 9 der Trageinrichtung 2, kann beispielsweise eine Skala 17 aufweisen, welche im bestimmungsgemäßen Betrieb der Vorrichtung 1 mit dem Begrenzungskörper 4 eine Bohrtiefeninformation 18 anzeigt. Dabei kann die Skala 17 derart angeordnet sein, dass diese eine relative Lage von Trageinrichtung 2 und Begrenzungskörper 4 sichtbar macht und/oder Abstandswerte sichtbar macht, welche das Distanzelement 5 relativ zu dem Hülsenkörper 9 seit Beginn eines Bohrvorgangs zurückgelegt hat.

Die Trageinrichtung 2, insbesondere der Hülsenkörper 9, und/oder der Begrenzungskörper 4 und/oder der Anschlagkörper 7 können beispielsweise derart über eine Schnittstelle BS einer Bohrmaschine BM an der Bohrmaschine BM befestigbar sein bzw. sind derart befestigt, dass die Trageinrichtung 2, insbesondere der Hülsenkörper 9, und/oder der Begrenzungskörper 4 und/oder der Anschlagkörper 7 überwiegend, bevorzugt ausschließlich, an einer dem zu bohrenden Bohrloch BL abgewandten oder zugewandten Seite 28 der Schnittstelle BS befestigt oder befestigbar sind. Die Schnittstelle BS kann beispielsweise zwischen einem Bohrfutter BF und einer Antriebseinheit BA angeordnet oder ausgebildet sein. Die Antriebseinheit BA ist über eine Welle BW, ggf. unter Zwischenschaltung eines Getriebes (nicht dargestellt), mit dem Bohrfutter BF bzw. mit einem in dem Bohrfutter BF aufgenommenen Bohrer drehmomentübertragend verbunden. In diesem Fall kann die Trageinrichtung 2, insbesondere der Hülsenkörper 9, derart angeordnet oder ausgebildet sein, dass es zu keiner seitlichen Überdeckung des Bohrfutters BF und der Trageinrichtung 2 und/oder des Hülsenkörpers 9 kommt. Auch kann damit ein Aufbau erreicht werden, der kein Überragen bzw. keinen Überstand der Trageinrichtung 2 und/oder des Hülsenkörper 9 über das Bohrfutters BF in Richtung des Bohrguts BG kommt. Damit kann die mit der Vorrichtung 1 ausgestattete Bohrmaschine BM nahe an das Bohrgut BG herangeführt werden, sodass die Verwendung kleinerer bzw. kurzer Bohrer mit einer mit der Vorrichtung 1 ausgestatteten Bohrmaschine BM ermöglicht wird.

Der Begrenzungskörper 4 kann beispielsweise vermittels einer Arretiereinrichtung 19 an dem Distanzelement 5 arretierbar sein bzw. arretiert werden, wobei die Arretiereinrichtung 19 eine kraft- und/oder formschlüssige Arretierung des Begrenzungskörpers 4 an dem Distanzelement 5 ermöglicht. Beispielsweise ist die Arretiereinrichtung 19 als Feststellschraube bzw. als Klemmschraube an dem Begrenzungskörper 4 befestigt, wobei durch ein Festziehen der Feststell- bzw. Klemmschraube eine relative Bewegbarkeit von Distanzelement 5 und Begrenzungskörper 4 gehemmt wird.

Die Vorrichtung 1 kann, wie beispielsweise in den Figuren 4 und 5 dargestellt, einen am Distanzelement 5 angeordnete, auf einem Bohrgut BG flächig aufsetzbaren Aufsetzkörper 20 umfassen. Dieser Aufsetzkörper 20 kann ein senkrechtes Heranführen einer Bohrmaschine BM zu einem ebenen Bohrgut unterstützen. So ist es beispielsweise möglich, dass ein Kontaktabschnitt des Aufsetzkörpers 20 senkrecht zur Längsachse des in der Bohrmaschine eingesetzten Bohrers ausgerichtet ist. Die Vorrichtung 1 kann ferner einen Bohrstaubsammler 21 mit einer dicht an der Bohrmaschine BM anbringbaren Maschinenkupplung, deren Abstand zum Aufsetzkörper 20 veränderbar ist sowie einer die Maschinenkupplung und den Aufsetzkörper 20 dichtend verbindenden Außenhülle 22 und einer innerhalb der Außenhülle 22 angeordneten, dichtend an der Maschinenkupplung angebrachten, eine Bohreröffnung aufweisenden Bohrfutterhülle 22 aufweisen. Durch diesen Bohrstaubsammler 21 kann es verhindert werden, dass ein während des Bohrens erzeugter Bohrstaub sich unkontrolliert in dem Umfeld der Bohrmaschine BM verteilt. So kann z. B. eine Saugeinrichtung, z. B. ein Staubsauger, über eine Saugleitung mit dem Bohrstaubsammler 21 verbunden werden, sodass etwaiger Bohrstaub über den Bohrstaubsammler 21 zu der Saugeinrichtung gelangen kann.

### BEZUGSZEICHENLISTE

- 1: Vorrichtung
- 2: Trageinrichtung
- 3: Längsachse von 2
- 4: Begrenzungskörper
- 5: Distanzelement
- 6: Position von 4
- 7: Anschlagkörper
- 8: Aufnahmeraum von 9
- 9: Hülsenkörper von 2
- 10: Lochstruktur von 9

- 12: erster Endbereich von 9
- 13: weiteres Abstützmittel
- 14: erstes Abstützmittel
- 15: Vorspannmittel
- 16: Hohlraum von 15
- 17: Skala von 9
- 18: Bohrtiefeninformation
- 19: Arretiereinrichtung
- 20: Aufsetzkörper
- 21: Bohrstaubsammler
- 22: Bohrfutterhülle
- 23: Adapter
- 24: freies Ende von 5
- 25: Halter
- 26: Eingriffselement
- 27: Ausnehmung von TS
- 28: Seite von BS
- 29: Nut
- 30: Eingriffshervorhebung von 23
- 31: Arretiermechanismus von TS
- 32: Verdickung
- 33: Schraubmittel
- 34: zweiter Endbereich
- 35: Adapterkörper
- 36: Gewindeabschnitt von 9
- 37: Öffnung von 25 oder 35
- 38: Schraubkörper
- 39: Doppelpfeil
- 40: Kontaktfläche von 4
- 41: Kontaktfläche von 7

- BM: Bohrmaschine
- BT: Bohrtiefe
- TS: Tiefenanschlagschnittstelle
- BG: Bohrgut
- BS: Schnittstelle zwischen BM und 2
- BF: Bohrfutter
- BA: Antriebseinheit
- BW: Welle

## Patentansprüche

1. Vorrichtung (1) zur Begrenzung einer Bohrtiefe (BT) für eine Bohrmaschine (BM), mit
- einer in einer festen Relativposition (R) zu einer Bohrmaschine (BM) platzierbare, eine Längsachse (3) definierende Trageinrichtung (2),
- einem an der Trageinrichtung (2) relativ zu dieser entlang der Längsachse (3) verschiebbar geführten Begrenzungskörper (4),
- einem am Begrenzungskörper (4) entlang der Längsachse (3) verschiebbar und arretierbar gehaltenen Distanzelement (5),
- einem an der Trageinrichtung (2) in wenigstens einer Position entlang der Längsachse (3) arretierbar gehaltenen Anschlagkörper (7), wobei die Vorrichtung (1) eingerichtet ist, durch Kontakt des Begrenzungskörpers (4) mit dem Anschlagkörper (7) eine vordefinierte Bohrtiefe (BT) zu begrenzen.

2. Vorrichtung (1) nach Anspruch 1, **dadurch gekennzeichnet, dass** die Trageinrichtung (2) einen, einen Aufnahmeraum (8) aufweisenden Hülsenkörper (9) umfasst, wobei in dem Aufnahmeraum (8) des Hülsenkörpers (9) der Begrenzungskörper (4) und/oder das Distanzelement (5) zumindest abschnittsweise angeordnet ist bzw. sind, bevorzugt weist der Hülsenkörper (9) eine Lochstruktur (10) auf, wobei der Begrenzungskörper (4) die Lochstruktur (10) zumindest abschnittsweise durchgreift.

3. Vorrichtung (1) nach einem der vorhergehenden Ansprüche, **dadurch gekennzeichnet, dass** das Distanzelement (5) über den Begrenzungskörper (4) und über ein Abstützmittel (14), welches an einem Halter (25) und/oder an einem Adapterkörper (35) angeordnet oder ausgebildet ist, abgestützt ist, bevorzugt ist die Abstützung des Distanzelements (5) an dem Halter (25) und/oder an dem Adapterkörper (35) als, insbesondere geradliniger, Kanal ausgebildet ist.

4. Vorrichtung (1) nach Anspruch 2 oder 3, **dadurch gekennzeichnet, dass** an wenigstens einem ersten Endbereich (12) des Hülsenkörpers (9) ein weiteres Abstützmittel (13) und an einem, dem ersten Endbereich (12) gegenüberliegenden Endbereich (34) ein erstes Abstützmittel (14) angeordnet oder ausgebildet sind, wobei die wenigstens zwei Abstützmittel (13, 14) eingerichtet sind, das Distanzelement (5) zu dem Hülsenkörper (9) zumindest abschnittsweise abzustützen.

5. Vorrichtung (1) nach einem der vorhergehenden Ansprüche, **dadurch gekennzeichnet, dass** die Trageinrichtung (2) einen Adapter (23) umfasst, der eingerichtet ist, die Vorrichtung (1) an eine Tiefenanschlagschnittstelle (TS) einer Bohrmaschine (BM) und/oder an eine Tiefenanschlagschnittstelle (TS) einer Griffeinrichtung einer Bohrmaschine (BM) und/oder eine Tiefenanschlagschnittstelle (TS) eines Halters (25) einer Bohrmaschine (BM) zu befestigen.

6. Vorrichtung (1) nach einem der vorhergehenden Ansprüche, **gekennzeichnet durch** ein Vorspannmittel (15), das den Begrenzungskörper (4) in eine vordefinierte Position (6) relativ zu der Trageinrichtung (2) vorspannt, bevorzugt spannt das Vorspannmittel (15) den Begrenzungskörper (4) in eine Endlagenposition vor, besonders bevorzugt.

7. Vorrichtung (1) nach Anspruch 6, **dadurch gekennzeichnet, dass** das Vorspannmittel (15) den Begrenzungskörper (4) in eine Position (6) des Begrenzungskörpers (4) vorspannt, die im bestimmungsgemäßen Betrieb einer mit der Vorrichtung (1) ausgestatteten Bohrmaschine (BM) einem zu bohrenden Bohrloch (BL) zugewandt ist.

8. Vorrichtung (1) nach Anspruch 6 oder 7, **dadurch gekennzeichnet, dass** das Vorspannmittel (15) zumindest abschnittsweise, bevorzugt überwiegend, besonders bevorzugt vollständig, in dem Aufnahmeraum (8) angeordnet ist.

9. Vorrichtung (1) nach einem der Ansprüche 6 bis 8, **dadurch gekennzeichnet, dass** das Vorspannmittel (15) einen Hohlraum (16) definiert, in welchem das Distanzelement (5) zumindest abschnittsweise aufgenommen oder aufnehmbar ist.

10. Vorrichtung (1) nach einem der vorhergehenden Ansprüche, **dadurch gekennzeichnet, dass** die Trageinrichtung (2), insbesondere ein Hülsenkörper (9) der Trageinrichtung (2), eine Skala (17) aufweist, welche im bestimmungsgemäßen Betrieb der Vorrichtung (1) mit dem Begrenzungskörper (4) eine Bohrtiefeninformation (18) anzeigt.

11. Vorrichtung (1) nach einem der vorhergehenden Ansprüche, **dadurch gekennzeichnet, dass** die Trageinrichtung (2), insbesondere der Hülsenkörper (9), und/oder der Begrenzungskörper (4) und/oder der Anschlagkörper (7) derart über eine Schnittstelle (BS) einer Bohrmaschine (BM) an der Bohrmaschine (BM) befestigbar ist bzw. sind, dass die Trageinrichtung (2), insbesondere der Hülsenkörper (9), und/oder der Begrenzungskörper (4) und/oder der Anschlagkörper (7) überwiegend, bevorzugt ausschließlich, an einer dem zu bohrenden Bohrloch (BL) abgewandten oder zugewandten Seite der Schnittstelle (BS) befestigt oder befestigbar sind.

12. Vorrichtung (1) nach einem der vorhergehenden Ansprüche, **dadurch gekennzeichnet, dass** der Begrenzungskörper (4) vermittels einer Arretiereinrichtung (19) an dem Distanzelement (5) arretierbar ist, wobei die Arretiereinrichtung (19) eine kraft- und/oder formschlüssige Arretierung des Begrenzungskörpers (4) an dem Distanzelement (5) ermöglicht.

13. Vorrichtung (1) nach einem der vorhergehenden Ansprüche, **gekennzeichnet durch** einen am Distanzelement (5) angeordneten, auf einem Bohrgut (BG) flächig aufsetzbaren Aufsetzkörper (20).

14. Vorrichtung (1) nach Anspruch 13, **gekennzeichnet durch** einen Bohrstaubsammler (21) mit
- einer dicht an der Bohrmaschine (BM) anbringbaren Maschinenkupplung, deren Abstand zum Aufsetzkörper (20) veränderbar ist,
- einer Maschinenkupplung und Aufsetzkörper (20) dichtend verbindenden Außenhülle (22),
- einer innerhalb der Außenhülle (22) angeordneten, dichtend an der Maschinenkupplung angebrachten, eine Bohreröffnung aufweisenden Bohrfutterhülle (22).

15. Verfahren zur Begrenzung einer Bohrtiefe BT für eine Bohrmaschine BM, **dadurch gekennzeichnet, dass** eine Vorrichtung (1) nach einem der vorhergehenden Ansprüche verwendet wird.
